# EUROPÄISCHE PATENTSCHRIFT

(11) **EP 1 362 829 B1**
(45) Veröffentlichungstag und Bekanntmachung des Hinweises auf die Patenterteilung: **22.11.2006**
(21) Anmeldenummer: 03008683.9
(22) Anmeldetag: 16.04.2003
(51) Int. Cl.: C01B 13/11

(54) **Ozongenerator**
Ozone generator
Générateur d'ozone

(30) Priorität: 07.05.2002 DE 10220467
(43) Veröffentlichungstag der Anmeldung: 19.11.2003
(73) Patentinhaber: Hydro-Elektrik GmbH, 88214 Ravensburg (DE)
(72) Erfinder: Bachhofer, Bruno, 88213 Ravensburg (DE)
(74) Vertreter: Eisele, Otten, Roth & Dobler

(56) Entgegenhaltungen:
- EP-A- 0 554 457
- US-A- 3 542 664
- US-A- 3 899 683
- US-A1- 2001 041 154

## Beschreibung

Die Erfindung betrifft einen Ozongenerator nach dem Oberbegriff des Anspruchs 1.

### Stand der Technik

Aus der deutschen Patentschrift PS-DE 3247373 C2 ist ein Ozonerzeuger mit runden Plattenelektroden in Stapelbauweise bekannt, wobei zwischen zwei voneinander distanzierten massiven Außenelektroden zwei Isolierstoffplatten angeordnet sind und zwischen diesen unter Bildung zweier Entladungsräume eine Innenelektrode angeordnet ist. Die Innenelektrode hat einen geringeren Außendurchmesser als die Isolierstoffplatten, wobei die Isolierstoffplatten einen in der Nähe ihrer Ränder verlaufenden Ring zwischen sich einklemmen. Die übereinander gestapelten Elektroden bilden mit den Dichtelementen einen zylinderischen Block, der zur Kühlung von außen mit Prozesswasser umspült ist.

Um in den Entladungsräumen die entstehende Wärme abführen zu können, ist es notwendig, dass die massiven Elektroden aus Aluminium bestehen, was eine gute Wärmeleitung nach außen zum Prozesswasser ermöglicht.

Allerdings ist selbst bei Verwendung von Aluminium der Wärmeabtransport in den Aluminiumelektroden der limitierende Faktor bei der Bemessung der zulässigen Maximalleistung.

Aus der DT 24 12 770 A1 ist eine Vorrichtung zur Herstellung von Ozon bekannt, die einen im Innern eines Mischtopfes eingetauchten Ozonerzeuger aufweist, dessen von Elektroden gebildete Außenoberfläche mit ozonisiertem Wasser außen gekühlt wird, wobei dem Wasser, welches in den Mischtopf eintritt, ozonisiertes Gas beigemischt wird.

### Aufgabe und Vorteile der Erfindung

Der Erfindung liegt die Aufgabe zugrunde, einen Ozongenerator der einleitend bezeichnenden Art insbesondere in Bezug auf das Leistungsvermögen effektiver zu gestalten.

Diese Aufgabe wird durch die Merkmale des Anspruchs 1 gelöst.

In den Unteransprüchen sind vorteilhafte zweckmäßige Ausgestaltungen der Erfindung angegeben.

Die Erfindung geht von einem Ozongenerator aus, der aus mehreren übereinander gestapelten, plattenförmigen Ozonerzeugungselementen besteht, die in einem Prozessraum angeordnet sind, in welchem sich Prozesswasser, das heißt Wasser, welches mit Ozon angereichert ist, befindet, das die ozonerzeugungselemente von außen umspült, wobei mit Ozon angereichertes Prozessgas in vorbeifließendes Prozesswasser einströmt, und wobei die Ozonerzeugungselemente jeweils wenigstens eine plattenförmige, elektrisch isolierte Innenelektrode und wenigstens eine ebenfalls plattenförmig angeordnete Gegenelektrode aufweisen, zwischen welchen Raum für eine Gasentladung gegeben ist. Der Kern der Erfindung liegt nun darin, dass die Ozonerzeugungselemente senkrecht zu ihrer plattenförmigen Erstreckung derart beabstandet sind, dass Prozesswasser an wesentliche Flächenbereiche der plattenförmigen Ozonerzeugungselemente zwischen die Ozonerzeugungselemente gelangen kann. Dieser Vorgehensweise liegt die Erkenntnis zugrunde, dass für die Bereitstellung eines Ozongenerators mit höherer Leistung bei zumindest gleicher Zuverlässigkeit, dieser mit einer wesentlich effektiveren Kühlung ausgestattet werden muss. Durch die Beabstandung der Ozonerzeugungselemente wird die Kühloberfläche im Vergleich zu dem bekannten Prinzip gemäß der PS-DE 32 47 373 C2 deutlich erhöht. Damit lassen sich die einzelnen Ozonerzeugungselemente, ohne zu überhitzen, mit wesentlich höheren Leistungen betreiben, wodurch eine entsprechend effektivere Ozonerzeugung ermöglicht wird.

Um eine noch bessere Kühlung zu erreichen, wird überdies vorgeschlagen, dass die Ozonerzeugungselemente derart angeordnet und ausgestaltet sind, dass im Bereich der Gasentladung zwischen den jeweiligen Ozonerzeugungselementen im Wesentlichen ganzflächig Prozesswasser strömen kann.

Außerdem ist es besonders vorteilhaft, wenn das Prozesswasser unmittelbar mit zumindest einer Außenelektrode des Ozonerzeugungselements in Kontakt steht. D.h. zwischen Außenelektrode und Prozesswasser liegt insbesondere keine dazwischenliegende Isolationsschicht. Durch diese Maßnahme wird die Effektivität der Kühlung weiter gesteigert.

In einer besonders bevorzugten Ausgestaltung der Erfindung sind Leitmittel vorgesehen, durch welche ein Teil des Prozesswasserstromes zwangsläufig zwischen den Ozonerzeugungselementen durchgeführt wird. Durch diese Vorgehensweise wird die Effektivität der Kühlung und damit das Leistungsvermögen des Generators, d. h. die maximal mögliche Ozonerzeugungsrate weiter verbessert. Für eine zusätzliche Steigerung der Kühlung wird darüber hinaus vorgeschlagen, dass die Leitmittel so ausgebildet sind, dass das Prozesswasser in einer Schraubenlinie durch die Zwischenräume der Ozonerzeugungselemente strömt.

Um eine Zwangsströmung zwischen den Ozonerzeugungselementen auf vergleichsweise einfache Art zu etablieren, wird außerdem vorgeschlagen, dass die Ozonerzeugungselemente zumindest teilweise von einem Mantel umgeben sind, der einen Zwischenraum zwischen den Ozonerzeugungselementen stirnseitig abdeckt und im Randbereich der Ozonerzeugungselemente Ausnehmungen vorgesehen sind, durch welche das Prozesswasser zwischen die Ozonerzeugungselemente gelangen kann. Dabei kann der Mantel durchaus von den Ozonerzeugungselementen nach außen, bei einer runden Elektrodenform radial nach außen etwas beabstandet sein, sodass Wasser nicht nur durch die Ausnehmungen zwischen die Ozonerzeugungselemente einströmen kann. Vorzugsweise sind die Ausnehmungen im Vergleich zu einem Randspalt zwischen Mantel und Ozonerzeugungselemente jedoch so dimensioniert, dass durch die Ausnehmungen das Strömungsverhalten des Kühlwassers maßgeblich bestimmt wird.

In einer weiteren Ausgestaltung der Erfindung ist es bevorzugt, dass die Ausnehmungen in Stapelrichtung der Ozonerzeugungselemente betrachtet, versetzt zu einander angeordnet sind. Vorzugsweise sitzen die Ausnehmungen im Randbereich der Ozonerzeugungselemente und sind derart versetzt, dass die Anordnung bei einer Betrachtung in Richtung Plattenebene als Treppenstruktur erscheint.

Diese Ausgestaltung eignet sich besonders dazu, in den Zwischenräumen der gestapelten Ozonerzeugungselemente eine schraubenförmige Strömung von Prozesswasser zu erzwingen, wenn zwischen den Ozonerzeugungselementen Trennmittel, z. B. Trennstege vorgesehen sind, die dafür Sorge tragen, dass der Zwischenraum zwischen den Ozonerzeugungselementen von einer Ausnehmung zirkular bis zur nächsten Ausnehmung eines benachbarten Ozonerzeugungselements durchströmt wird und die Strömung im darüber liegenden Zwischenraum zwischen dem benachbarten Ozonerzeugungselement und dem darauffolgenden Ozonerzeugungselement sich ebenfalls zirkular ausbildet. D. h. bildlich gesprochen, wird die zirkulare Strömung um z. B. die Breite einer Ausnehmung versetzt in die nächste Ebene weitergegeben und so weiter. Vorzugsweise wird der Zwischenraum zwischen allen Ozonerzeugungselementen so durchströmt, bis die Wasserströmung am oben liegenden Ozonerzeugungselement in einem Prozessraum austritt.

Durch diese Vorgehensweise kann ein wesentlicher Teil der Elektrodenflächen effektiv gekühlt werden. Hierdurch lassen sich auf vergleichsweise kleinem Raum hohe Ozonerzeugungsraten realisieren. Des Weiteren ist die Zahl von übereinander gestapelten Ozonerzeugungselementen im Wesentlichen nicht limitiert, da die Kühlung der Ozonerzeugungselemente im Hinblick auf den maximal möglichen Wärmeabtransport bei einer bislang verwendeten Zahl von Ozonerzeugungselementen noch lange nicht an ihrer Leistungsgrenze angelangt ist.

In einer weiteren bevorzugten Ausgestaltung der Erfindung bestehen zumindest die Außenflächen der Ozonerzeugungselemente aus Edelstahl. Vorteilhafterweise sind die Außenelektroden vollkommen aus Edelstahl gefertigt. Durch das Kühlprinzip der Ozonerzeugungselemente über deren Zwischenräume können nunmehr Materialien eingesetzt werden, die im Vergleich zu Aluminium eine deutlich schlechtere Wärmeleitfähigkeit besitzen, jedoch im Hinblick auf Aluminium andere Vorteile aufweisen. Durch die Verwendung von Edelstahl erhält man einen außerordentlich korrosionsbeständigen Aufbau, der dementsprechend eine vergleichsweise hohe Lebensdauer und Zuverlässigkeit eines Ozongenerators ermöglicht.

### Zeichnungen

Zwei Ausführungsbeispiele der Erfindung sind in den Zeichnungen dargestellt, unter Angabe weiterer Einzelheiten und Vorteile näher erläutert.

Es zeigen
- Fig. 1a: einen Ozonoxidator in einer teilweise geschnittenen Seitenansicht,
- Fig. 1b: einen vergrößerten Ausschnitt eines Ozonerzeugungselements nach Figur 1a,
- Fig. 2: ein Ozonerzeugungselement einer Ozongenerzeugungseinheit nach Figur 1a und 1b in einer Draufsicht,
- Fig. 3a: teilweise montierte übereinander gestapelte Ozonerzeugungselemente in einer perspektivischen Ansicht von schräg unten und
- Fig. 3b: eine vergrößerte perspektivische Ansicht eines Ausschnitts des Ozonerzeugungselements-Stapels gemäß Figur 3a.

### Beschreibung der Ausführungsbeispiele

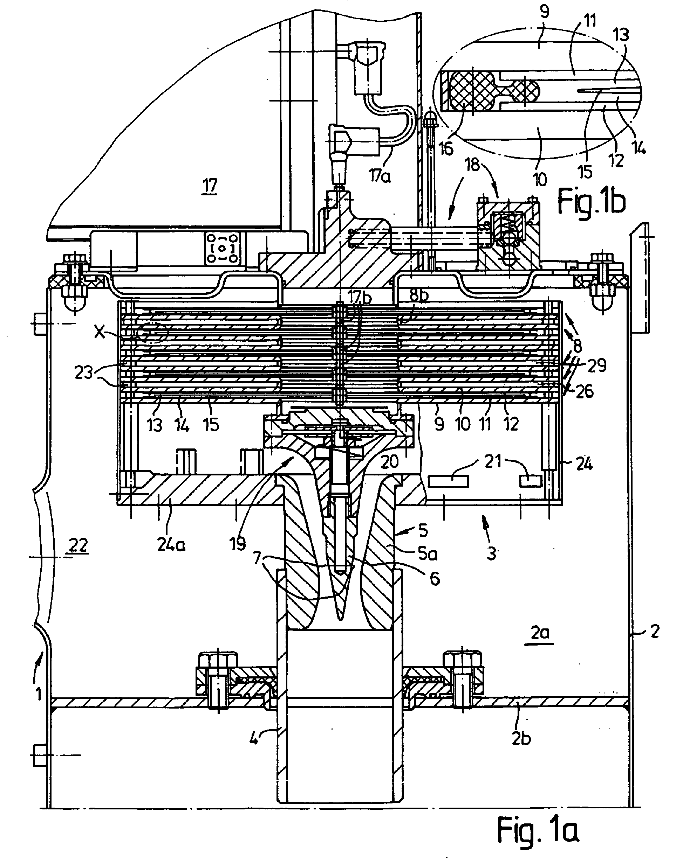

Figur 1a und 1b zeigt einen Ozonoxidator 1 mit einem nach außen dichten Prozessraumgehäuse 2. Im Prozessraum 2a des Gehäuses 2 ist eine Ozonerzeugungseinheit 3 angeordnet. Im Boden 2b des Gehäuses 2 ist ein Wasserzuführstutzen 4 abgedichtet eingefügt. Der Wasserzuführstutzen 4 geht in eine Venturidüseneinheit 5 über, die an der Unterseite der Ozonerzeugungseinheit 3 montiert ist. Die Venturidüseneinheit 5 besteht aus einer Venturidüse 5a, innerhalb derer ein Injektorelement 6 mit Ausströmöffnungen 7 zentrisch angeordnet ist. Das Injektorelement 6 ist durch eine Ventilanordnung 19 getrennt an der Unterseite eines Stapels von Ozonerzeugungselementen 8 der Ozonerzeugungseinheit 3 befestigt. Über den Wasserzuführstutzen 4 einströmendes Wasser wird mit hoher Geschwindigkeit an den Ausströmöffnungen 7 vorbeigeführt, aus denen Gas mit einem vorgegebenen Anteil an Ozon ausströmt, das in den Ozonerzeugungselementen 8 gebildet wird.

Die Ozonerzeugungselemente 8 umfassen zwei Außenelektroden 9, 10 (siehe hierzu insbesondere Figur 1b), auf die nach innen betrachtet zur elektrischen Isolation jeweils eine Glasplatte 11, 12 folgt. Die Glasplatten sind über Abstandshalter (nicht gezeigt) in einem vorgegebenen Abstand positioniert, wobei der Zwischenraum zwischen den Glasplatten durch ein entlang des äußeren Randes eingeklemmt verlaufendes Dichtelement gasdicht abgeschlossen ist. Im Bereich zwischen den Glasplatten 11, 12 ist vorzugsweise mittig eine Innenelektrode 15 angeordnet, deren Durchmesser kleiner ist als der der Glasplatten 11, 12. Hierdurch entstehen zwei Entladungsräume 13, 14, in welchen sich zwischen den Glasplatten 11, 12 jeweils eine Koronaentladung bei Anlegung von Hochspannung an die Innenelektrode 15 und bei Zuführung von entsprechendem Prozessgas etablieren kann.

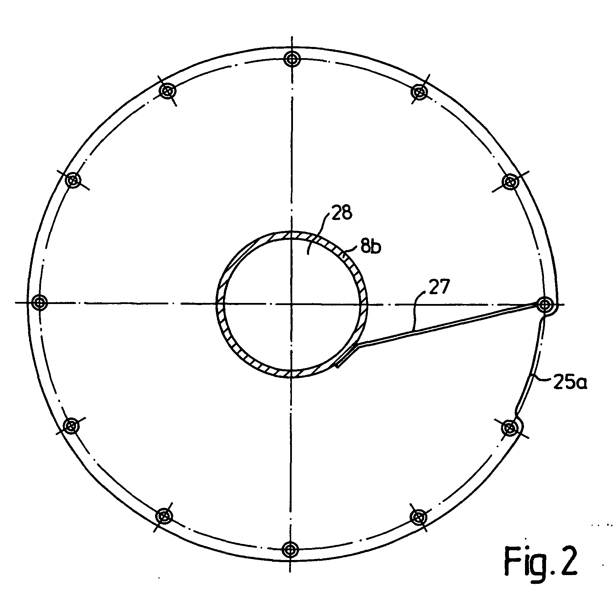

Für die Hochspannungsversorgung ist eine Hochspannungseinheit 17 vorgesehen, die über Verbindungselemente 17a, 17b die Innenelektroden mit Hochspannung beaufschlagen kann. Dabei sind die Verbindungselemente 17b zentrisch in einem Kernbereich 8a der Ozonerzeugungselemente 8 jeweils von Innenelektrode 15 zu Innenelektrode 15 geführt. Der Kernbereich 8a ist durch die Außenelektroden 9, 10, die Dichtelemente 16 sowie ringförmige Wandabschnitte 8b nach außen gasdicht abgeschlossen (siehe hierzu auch Figur 2).

Für die Bereitstellung von Prozessgas, das technischer Sauerstoff, Luft oder ein Sauerstoffgasgemisch sein kann, ist eine Gaseinführung über eine Ventileinheit 18 vorgesehen, die das Prozessgas unter Druck dem gasdicht geschlossenen Bereich der Ozonerzeugungseinheit 8 zuführt. Durch eine an den Innenelektroden angelegte Hochspannung bildet sich eine stille elektrische Entladung (Koronaentladung) aus, aufgrund welcher in bekannter Weise Ozon entsteht. Das mit Ozon angereicherte Prozessgas wird über die Ventilanordnung 19, den Ausströmöffnungen 7 der Venturidüseneinheit 5 zugeführt und strömt dort in das daran vorbeifließende Prozesswasser ein.

Die Ventilanordnung 19 verhindert, dass Prozesswasser über die Venturidüseneinheit 5 in den abgedichteten Bereich der Ozonerzeugungselemente 8 gelangen kann.

Das aus der Venturidüseneinheit 5 abfließende Prozesswasser gelangt in einen Bereich 20 unterhalb der übereinandergestapelten Ozonerzeugungselemente 8. Hier verlässt das Prozesswasser teilweise durch Austrittsöffnungen 21 in einem Mantel 24, der die Ozonerzeugungselemente und den Bereich 20 umgibt, den Bereich 20 in den Prozessraum 2 und kann über einen Auslassstutzen 22 im Prozessraumgehäuse 2 abströmen. Nach unten ist das vom Mantel 24 eingeschlossene Volumen durch eine Bodenplatte 24a begrenzt, in der die Venturidüse 5a dicht eingesetzt ist.

Die übereinandergestapelten Ozonerzeugungselemente 8 werden durch Abstandshalter 23 auf Abstand gehalten, sodass sich zwischen den Ozonerzeugungselementen 8 bis auf einen Kernquerschnitt 28, der durch die ringförmigen Wandabschnitte 8a definiert wird, Zwischenräume 26, 29 entstehen.

Der Teil des Prozesswassers, der den Bereich 20 nicht durch die Austrittsöffnungen 21 verlässt, wird durch diese Zwischenräume 26, 29 zwangsgeführt und verlässt die Ozonerzeugungseinheit 3 erst am obersten Ozonerzeugungselement 8 in den Prozessraum 2a.

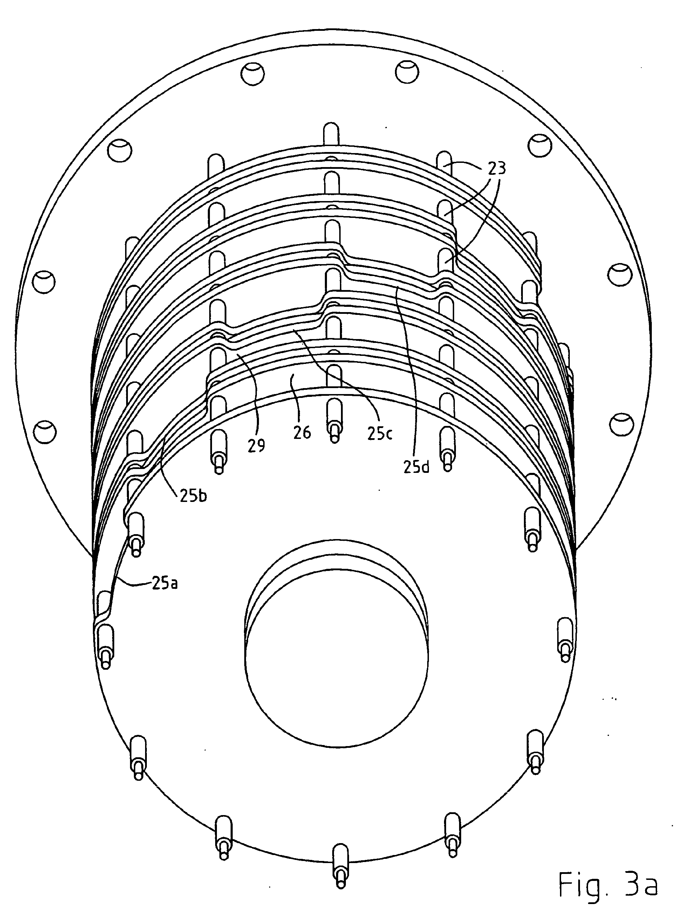

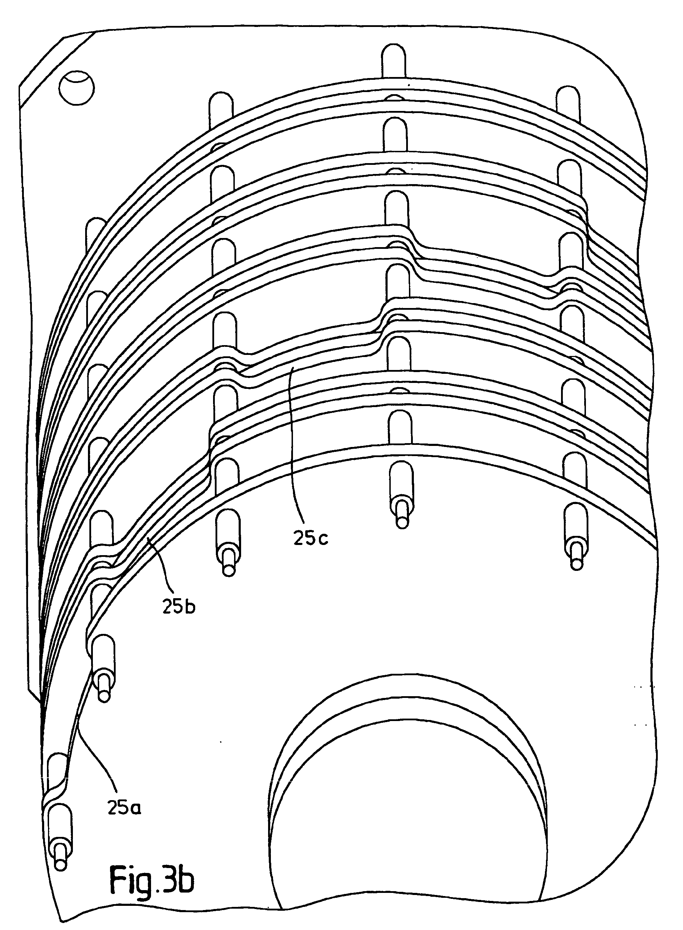

Für die Ausbildung einer zirkularen, schraubenförmigen Wasserströmung durch die Zwischenräume 26, 29 über den Stapel der Ozonerzeugungselemente 8 hinweg weisen die Ozonerzeugungselemente 8 an ihren äußeren Rändern Ausnehmungen 25a, 25b, 25c, 25d auf, die in Richtung Mantelfläche 24 schauend in einer Art Treppenstruktur angeordnet sind (siehe hierzu insbesondere Figur 3a und 3b).

Der in den Figuren 3a und 3b abgebildete Stapel von Ozonerzeugungselementen, kann in einem Ozongenerator 1 gemäß Figur 1a eingesetzt werden.

Über eine Ausnehmung 25a kann Prozesswasser in den Zwischenraum 26 zwischen den von unten ersten beiden Ozonerzeugungselementen 8 gelangen. Durch ein Leitblech 27 sowie den umgebenen Mantel 24 (in Figur 3a und 3b nicht dargestellt) wird das durch die Ausnehmung 25a eintretende Wasser in eine zirkulare Strömung hier beispielhaft gegen den Uhrzeigersinn um den Kernquerschnitt 28 gezwungen. In gleicher Weise wäre eine Störung mit dem Uhrzeigersinn möglich. Außerdem ist es denkbar die Strömungsrichtung von Ozonerzeugniselement zu Ozonerzeugniselement umzukehren.

Das Leitblech 27 trennt den Zwischenraum 26 vom Wandabschnitt 8b bis ungefähr zum Mantel 24. Nach wie vor kleine auftretende Spalten nach außen können bei entsprechender Dimensionierung in hydrodynamischer Sicht vernachlässigt werden.

Somit gelangt das durch die Ausnehmung 25a einströmende Wasser bis auf die Rückseite des Leitblechs 27. Dort kann es durch eine in diesem Segment im darüber liegenden Ozonerzeugungselement 8 angeordnete Ausnehmung 25b in den Zwischenraum 29 zwischen diesem Ozonerzeugungselement 8 und dem darauffolgenden Ozonerzeugungselement 8 einströmen. Ein dort ebenfalls angeordnetes Leitblech 27 sorgt dafür, dass sich die gleiche zirkulare Strömung gegen den Uhrzeigersinn ausbildet. Entsprechende Ausnehmungen 25c, 25d usw. sind in darüberliegend angeordneten Ozonerzeugungselementen 8 mit entsprechenden Leitblechen 27 vorgesehen, sodass sich bis zum letzten oben liegenden Ozonerzeugungselement 8 eine schraubenförmige Strömung zwischen den Ozonerzeugungselementen 8 einstellt, die am ersten von oben angeordneten Ozonerzeugungselement die Ozonerzeugungseinheit 3 in den Prozessraum 2 verlässt. Dieser Wasseranteil kann dann auch durch den Auslassstutzen 22 abströmen.

Hierdurch wird eine besonders effektive Kühlung der Ozonerzeugungselemente realisiert. Dadurch können die Ozonerzeugungselemente in einem Leistungsbereich betrieben werden, der bei einem herkömmlichen Aufbau ohne Zwischenräume zwischen den Ozonerzeugungselementen zu einer vorzeitigen Zerstörung der Ozonerzeugungseinheit führen würde. Durch das Betreiben der Ozonerzeugungseinheit bei höherer Leistung, kann die Ozonerzeugungsrate erheblich gesteigert werden, wodurch die Ozonerzeugungseinheit deutlich effektiver arbeitet. In einem System, in welchem durch das Ozon eine Entkeimung vorgenommen wird, können daher Ozonerzeugungseinheiten eingespart oder volumenmäßig kleiner dimensioniert werden.

Ein weiterer großer Vorteil eines derartigen Aufbaus liegt darin, dass nunmehr durch die verbesserte Kühlung die Außenelektroden 9, 10 der Ozonerzeugungselemente 8 sowie die Wandabschnitte 8b aus Edelstahl gefertigt werden können. Durch die hohe Korrosionsbeständigkeit von Edelstahl ist eine lange Lebensdauer und eine hohe Zuverlässigkeit der Ozonerzeugungseinheit 3 gewährleistet.

Sofern eine derartige Ozonerzeugungseinheit für die Aufbereitung von Wasser in Schwimmbädern zur Anwendung kommt, trägt die Erwärmung des Wasser bei der Kühlung der Ozonerzeugungselemente 8 überdies dazu bei, das Schwimmbadwasser zu erwärmen.

### Bezugszeichenliste:

- 1: Ozonoxidator
- 2: Prozessraumgehäuse
- 2a: Prozessraum
- 2b: Boden
- 3: Ozonerzeugungseinheit
- 4: Wasserzuführstutzen
- 5: Venturidüseneinheit
- 6: Injektorelement
- 7: Ausströmöffnungen
- 8: Ozonerzeugungselement
- 8a: Kernbereich
- 8b: Wandabschnitte
- 9: Außenelektrode
- 10: Außenelektrode
- 11: Glasplatte
- 12: Glasplatte
- 13: Entladungsraum
- 14: Entladungsraum
- 15: Innenelektrode
- 16: Dichtelement
- 17: Hochspannungseinheit
- 17a: Verbindungselement
- 17b: Verbindungselement
- 18: Ventileinheit
- 19: Ventilanordnung
- 20: Bereich
- 21: Austrittsöffnungen
- 22: Auslassstutzen
- 23: Abstandshalter
- 24: Bodenplatte
- 25a: Ausnehmung
- 25b: Ausnehmung
- 25c: Ausnehmung
- 25d: Ausnehmung
- 26: Zwischenraum
- 27: Leitblech
- 28: Kernquerschnitt
- 29: Zwischenraum

## Patentansprüche

1. Ozongenerator (3) bestehend aus mehreren übereinander gestapelten, plattenförmigen Ozonerzeugungselementen (8), die in einem Prozessraum angeordnet sind, in welchem sich Prozesswasser befindet, das die Ozonerzeugungselemente (8) von außen umspült, wobei mit Ozon angereichertes Prozessgas in vorbeifließendes Prozesswasser einströmt, und wobei die Ozonerzeugungselemente (8) jeweils wenigstens eine plattenförmige elektrisch isolierte Innenelektrode (15) und wenigstens eine ebenfalls plattenförmige Gegenelektrode (9, 10) aufweisen, zwischen welchen Raum (13, 14) für eine Gasentladung gegeben ist, **dadurch gekennzeichnet, dass** die Ozonerzeugungselemente (8) senkrecht zur plattenförmigen Erstreckung beabstandet sind, sodass Prozesswasser an wesentlichen Flächenbereichen der plattenförmigen Ozonerzeugungselemente (8) zwischen die Ozonerzeugungselemente (8) gelangen kann.

2. Ozongenerator nach Anspruch 1, **dadurch gekennzeichnet, dass** die Ozonerzeugungselemente (8) derart angeordnet und ausgestaltet sind, dass im Bereich der Gasentladung zwischen den jeweiligen Ozonerzeugungselementen im Wesentlichen ganzflächig Prozesswasser strömen kann.

3. Ozongenerator nach Anspruch 1 oder 2, **dadurch gekennzeichnet, dass** das Prozesswasser unmittelbar mit zumindest einer Außenelektrode (9, 10) des jeweiligen Ozonerzeugungselements (8) in Kontakt steht.

4. Ozongenerator nach einem der vorhergehenden Ansprüche, **dadurch gekennzeichnet, dass** Leitmittel (8b, 24, 25a, 25b, 25c, 25d, 27) vorgesehen sind, durch welche ein Teil des Prozesswasserstroms zwangsläufig zwischen den Ozonerzeugungselementen (8) durchgeführt wird.

5. Ozongenerator nach einem der vorhergehenden Ansprüche, **dadurch gekennzeichnet, dass** die Leitmittel (8b, 24, 25a, 25b, 25c, 25d, 27) so ausgebildet sind, dass das Prozesswasser in einer Schraubenlinie durch die Zwischenräume (26, 29) der Ozonerzeugungselemente strömt.

6. Ozongenerator nach einem der vorhergehenden Ansprüche, **dadurch gekennzeichnet, dass** die Ozonerzeugungselemente (8) wenigstens teilweise von einem Mantel (24) umgeben sind, der einen Zwischenraum (26, 29) zwischen den Ozonerzeugungselementen (8) stirnseitig abdeckt und im Randbereich der Ozonerzeugungselemente (8) Ausnehmungen (25a, 25b, 25c, 25d) vorgesehen sind, durch welche das Prozesswasser zwischen die Ozonerzeugungselemente (8) gelangen kann.

7. Ozongenerator nach einem der vorhergehenden Ansprüche, **dadurch gekennzeichnet, dass** die Ausnehmungen (25a, 25b, 25c, 25d) in Stapelrichtung der Ozonerzeugungselemente (8) betrachtet, versetzt zueinander angeordnet sind.

8. Ozongenerator nach einem der vorhergehenden Ansprüche, **dadurch gekennzeichnet, dass** die Ausnehmungen (25a, 25b, 25c, 25d) in Stapelrichtung der Ozonerzeugungselemente (8) betrachtet, versetzt zueinander angeordnet sind und zwischen den Ozonerzeugungselementen Trennmittel (27) vorgesehen sind, die dafür Sorge tragen, dass der Zwischenraum (26,) zwischen den Elementen von einer Ausnehmung (25a) bis zur nächsten Ausnehmung (25b) eines benachbarten Ozonerzeugungselements (8) zirkular durchströmt wird und die Strömung im darüber liegendem Zwischenraum (29) zwischen dem benachbarten Ozonerzeugungselement (8) und dem darauffolgenden Ozonerzeugungselement (8) sich ebenfalls zirkular ausbildet.

9. Ozongenerator nach einem der vorhergehenden Ansprüche, **dadurch gekennzeichnet, dass** Außenflächen der Ozonerzeugungselemente (8) aus Edelstahl bestehen.

## Claims

1. Ozone generator (3) consisting of a plurality of plate-shaped ozone generating elements (8) which are stacked on top of each other and are arranged in a process chamber which contains process water that washes round the ozone generating elements (8) from the exterior, wherein ozone-enriched process gas flows into passing process water and wherein the ozone generating elements (8) each have at least one plate-shaped electrically insulated inner electrode (15) and at least one similarly plate-shaped counter electrode (9, 10) between which there is space (13,14) for a gas discharge, **characterised in that** the ozone generating elements (8) are spaced apart perpendicularly to the plate-shaped expanse, so that process water is able to pass between the ozone generating elements (8) over substantial areas of the ozone generating elements (8).

2. Ozone generator according to claim 1, **characterised in that** the ozone generating elements (8) are arranged and designed in such a way that process water can flow substantially and extensively in the region of the gas discharge between the respective ozone generating elements.

3. Ozone generator according to claim 1 or 2, **characterised in that** the process water is in direct contact with at least one of the outer electrodes (9, 10) of the respective ozone generating element (8).

4. Ozone generator according to any one of the preceding claims, **characterised in that** guide means (8b, 24, 25a, 25b, 25c, 25d, 27) are provided, through which a part of the process water stream is forced to flow between the ozone generating elements (8).

5. Ozone generator according to any one of the preceding claims, **characterised in that** the guide means (8b, 24, 25a, 25b, 25c, 25d, 27) are so constructed, that the process water flows in a spiral line through the intermediate spaces (26, 29) in the ozone generating elements.

6. Ozone generator according to any one of the preceding claims, **characterised in that** the ozone generating elements (8) are at least partly surrounded by a casing (24) that covers an intermediate space (26, 29) between the ozone generating elements (8) at the end face, and recesses (25a, 25b, 25c, 25d) are provided in the edge region of the ozone generating elements (8) through which the process water can pass between the ozone generating elements (8).

7. Ozone generator according to any one of the preceding claims, **characterised in** the recesses (25a, 25b, 25c, 25d), viewed in the stacking direction of the ozone generating elements (8), are arranged offset from one another.

8. Ozone generator according to any one of the preceding claims, **characterised in that** the recesses (25a, 25b, 25c, 25d), viewed in the stacking direction of the ozone generating elements (8), are offset from one another, and partitions (27) are provided between the ozone generating elements to ensure that the intermediate space (26) between the elements receives a circular flow, from one recess (25a) to the next recess (25b) in an adjoining ozone generating element (8), and the flow in the intermediate space (29) thereabove, between the adjoining ozone generating element (8) and the succeeding ozone generating element (8) also has a circular design.

9. Ozone generator according to any one of the preceding claims, **characterised in that** outer surfaces of the ozone generating elements (8) are made of stainless steel.

## Revendications

1. Générateur d'ozone (3) composé de plusieurs éléments de production d'ozone (8) en forme de plaques, empilés les uns au-dessus des autres, lesquels sont agencés dans une chambre de procédé où se trouve l'eau de procédé qui balaie les éléments de production d'ozone (8) depuis l'extérieur, du gaz de procédé-enrichi en ozone affluant dans l'eau de procédé passant par ces éléments et les éléments de production d'ozone (8) présentant chacun au moins une électrode intérieure (15) en forme de plaque isolée électriquement et au moins une contre-électrode (9, 10) également en forme de plaque entre lesquelles il y a de l'espace (13, 14) pour une décharge de gaz,
**caractérisé en ce que** les éléments de production d'ozone (8) sont situés à distance les uns des autres dans le sens perpendiculaire à l'étendue en forme de plaque, de sorte que l'eau de procédé peut atteindre des zones de surface importantes des éléments de production d'ozone (8) en forme de plaques entre les éléments de production d'ozone (8).

2. Générateur d'ozone selon la revendication 1,
**caractérisé en ce que** les éléments de production d'ozone (8) sont agencés et conçus de telle manière que, dans la zone de la décharge de gaz entre les différents éléments de production d'ozone, de l'eau de procédé peut s'écouler essentiellement sur toute la surface.

3. Générateur d'ozone selon la revendication 1 ou 2,
**caractérisé en ce que** l'eau de procédé est en contact direct avec au moins une électrode extérieure (9, 10) de l'élément de production d'ozone (8) concerné.

4. Générateur d'ozone selon l'une des revendications précédentes, **caractérisé en ce qu'**il est prévu des moyens de guidage (8b, 24, 25a, 25b, 25c, 25d, 27) par lesquels une partie du flux d'eau de procédé est obligatoirement guidée entre les éléments de production d'ozone (8).

5. Générateur d'ozone selon l'une des revendications précédentes, **caractérisé en ce que** les moyens de guidage (8b, 24, 25a, 25b, 25c, 25d, 27) sont réalisés de telle manière que l'eau de procédé s'écoule en hélice à travers les espaces intermédiaires (26, 29) des éléments de production d'ozone.

6. Générateur d'ozone selon l'une des revendications précédentes, **caractérisé en ce que** les éléments de production d'ozone (8) sont entourés au moins en partie d'une chemise (24) qui recouvre du côté frontal un espace intermédiaire (26, 29) entre les éléments de production d'ozone (8) et **en ce qu'**il est prévu dans la zone de bord des éléments de production d'ozone (8) des évidements (25a, 25b, 25c, 25d) par lesquels l'eau de procédé peut parvenir entre les éléments de production d'ozone (8).

7. Générateur d'ozone selon l'une des revendications précédentes, **caractérisé en ce que** les évidements (25a, 25b, 25c, 25d), considérés dans le sens d'empilage des éléments de production d'ozone (8), sont agencés de manière décalée les uns par rapport aux autres.

8. Générateur d'ozone selon l'une -des revendications précédentes, **caractérisé en ce que** les évidements (25a, 25b, 25c, 25d), considérés dans le sens d'empilage des éléments de production d'ozone (8), sont agencés de manière décalée les uns par rapport aux autres et **en ce qu'**il est prévu entre les éléments de production d'ozone des moyens de séparation (27) qui font que l'espace intermédiaire (26) entre les éléments est traversé de manière-circulaire d'un évidement (25a) à l'évidement suivant (25b) d'un élément de production d'ozone (8) voisin et que-le flux se forme également de manière circulaire dans l'espace intermédiaire (29) situé au-dessus entre l'élément de production d'ozone (8) voisin et l'élément de production d'ozone (8) suivant.

9. Générateur d'ozone selon l'une des revendications précédentes, **caractérisé en ce que** les surfaces extérieures des éléments de production d'ozone (8) sont en acier spécial.
